(19) Europäisches Patentamt / European Patent Office / Office européen des brevets

(11) **EP 4 525 427 A1**

(12) **EUROPEAN PATENT APPLICATION**

(43) Date of publication:
**19.03.2025 Bulletin 2025/12**

(21) Application number: **24156324.6**

(22) Date of filing: **07.02.2024**

(51) International Patent Classification (IPC):
**H04N 1/60** (2006.01)  **H04N 1/00** (2006.01)
**H04N 1/54** (2006.01)

(52) Cooperative Patent Classification (CPC):
**H04N 1/6025; H04N 1/00087; H04N 1/60;**
**H04N 1/6005; H04N 1/6008; H04N 1/6016;**
**H04N 1/6022;** H04N 1/00034; H04N 1/54;
H04N 1/6019; H04N 1/6033; H04N 1/6038;
H04N 1/605; H04N 1/6094; H04N 1/6097

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **14.09.2023 JP 2023149229**

(71) Applicant: **FUJIFILM Business Innovation Corp.**
**Minato-ku**
**Tokyo (JP)**

(72) Inventors:
• **YAMAUCHI, Kaoru**
  **Kanagawa (JP)**
• **KUBO, Masahiko**
  **Kanagawa (JP)**
• **IWAFUCHI, Toshihiro**
  **Kanagawa (JP)**
• **YOKOHASHI, Mami**
  **Kanagawa (JP)**

(74) Representative: **Haseltine Lake Kempner LLP**
**Bürkleinstrasse 10**
**80538 München (DE)**

(54) **COLOR CONVERSION APPARATUS, COLOR-CONVERSION-TABLE GENERATING APPARATUS, PROGRAM, AND METHOD**

(57) A color conversion apparatus includes a processor configured to: generate a first color-conversion table describing a correspondence between an input value in a first color space and a colorimetric value in the first color space, the first color space being independent of a printer, the colorimetric value being a result of color measurement of a printed image obtained by the printer printing a signal value in a second color space, the second color space being dependent of the printer, the signal value in the second color space being a conversion result of the input value; and convert an input signal value in the first color space to a signal value in the second color space by using the first color-conversion table and a second color-conversion table, the second color-conversion table being predetermined in accordance with the printer and being used to convert a signal value in the first color space to a signal value in the second color space.

FIG. 3

## Description

Background

(i) Technical Field

The present disclosure relates to a color conversion apparatus, a color-conversion-table generating apparatus, a program, and a method.

(ii) Related Art

Techniques of the related art include a technique of using the so-called Kueppers' method to convert input signals such as L*a*b* color signals to color signals, each of which includes color signals of normal colors such as YMCK used by an image output apparatus and color signals of spot colors such as pink and green (PG). For example, in the Kueppers' method, after conversion of L*a*b* color signals to CMY signals, RGB signals, or the like, the resulting color signals are subjected to under-color removal (UCR) processing for achromatic components and UCR processing for chromatic components. Thus, L*a*b* color signals are converted to color signals of YMCK + PG.

As a technique of the related art, Japanese Patent No. 4206743 discloses a technique of converting L*a*b* color signals to image recording signals YMCKO, which are input to an image output apparatus, in the following manner: the black color amount K and the spot color amount O are determined from each input L*a*b* color signal; from the L*a*b* color signal and the KO color signals, a YMC color signal, which colorimetrically matches the input L*a*b* color signal, for the image output apparatus is determined under the condition that the black color amount is determined by the K color signal and the spot color amount is determined by the O color signal.

In the case where signal values in a printer-independent first color space are converted to signal values in a printer-dependent second color space, if, like the Kueppers' method, colorimetric matching between signal values in the first color space and signal values in the second color space is not considered, the color reproducibility of a printer is likely to be reduced.

Meanwhile, in view of improved color reproducibility, conversion conditions such as a printer model, which indicate correspondences between the first color space and the second color space and which are made on the basis of the colorimetric result of an image printed by a printer, may be solved numerically to generate a color conversion table for converting signal values in the first color space to signal values in the second color space, so that signal values in the first color space colorimetrically match signal values in the second color space. In this case, the time required for color conversion is likely to be long.

Summary

Accordingly, it is an object of the present disclosure to provide a technique enabling a reduction of the time required to convert signal values in a printer-independent first color space to signal values in a printer-dependent second color space, compared with the case in which a color conversion table is generated by numerically solving conversion conditions generated on the basis of the colorimetric result of an image printed by a printer.

According to a first aspect of the present disclosure, there is provided a color conversion apparatus comprising: a processor configured to: generate a first color-conversion table describing a correspondence between an input value in a first color space and a colorimetric value in the first color space, the first color space being independent of a printer, the colorimetric value being a result of color measurement of a printed image obtained by the printer printing a signal value in a second color space, the second color space being dependent of the printer, the signal value in the second color space being a conversion result of the input value; and convert an input signal value in the first color space to a signal value in the second color space by using the first color-conversion table and a second color-conversion table, the second color-conversion table being predetermined in accordance with the printer and being used to convert a signal value in the first color space to a signal value in the second color space.

According to a second aspect of the present disclosure, in the color conversion apparatus according to the first aspect, the processor is configured to: obtain sheet information which is information about a type of a sheet on which the printer prints an image, and generate the first color-conversion table in accordance with the sheet information.

According to a third aspect of the present disclosure, in the color conversion apparatus according to the second aspect, the second color-conversion table is determined based on a predetermined regular sheet, and the processor is configured to: when a difference in color between the regular sheet and a sheet on which the printer prints an image falls within a predetermined range, convert a signal value in the first color space to a signal value in the second color space by using the second color-conversion table.

According to a fourth aspect of the present disclosure, in the color conversion apparatus according to the second aspect, the second color-conversion table is determined in accordance with the sheet type, and the processor is configured to: generate the first color-conversion table on a basis of the sheet information by using the colorimetric value of the printed image printed on a basis of a signal value which is in the second color space and which is obtained through conversion of the input value using the second color-conversion table corresponding to the sheet type.

According to a fifth aspect of the present disclosure, in the color conversion apparatus according to any one of the first to fourth aspects, the processor is configured to: generate the first color-conversion table for converting the colorimetric value in the first color space to a signal value which is in the first color space and which corresponds to the input value.

According to a sixth aspect of the present disclosure, in the color conversion apparatus according to the fifth aspect, the processor is configured to: generate a first correspondence for converting the input value in the first color space to the colorimetric value in the first color space, and generate the first color-conversion table through reverse conversion of the first correspondence.

According to a seventh aspect of the present disclosure, in the color conversion apparatus according to any one of the first to sixth aspects, the processor is configured to: convert a signal value in the first color space of three variables to a signal value in the second color space of five or more variables including a signal value of a normal color and a signal value of a spot color, the normal color being a color used normally, the spot color being a color other than the normal color.

According to an eighth aspect of the present disclosure, in the color conversion apparatus according to any one of the first to seventh aspects, the processor is configured to: combine the first color-conversion table with the second color-conversion table and generate an output profile which is used to convert, for output, an input signal value in the first color space to a signal value in the second color space; and convert a first-color-space signal value to a signal value in the second color space by using the output profile, the first-color-space signal value being in the first color space and being obtained through conversion from a signal value in a third color space through an input profile, the third color space being dependent of an input apparatus.

According to a ninth aspect of the present disclosure, there is provided a color-conversion-table generating apparatus comprising: a processor configured to: generate a first color-conversion table describing a correspondence between an input value in a first color space and a colorimetric value in the first color space, the first color space being independent of a printer, the colorimetric value being a result of color measurement of a printed image obtained by the printer printing a signal value in a second color space, the second color space being dependent of the printer, the signal value in the second color space being a conversion result of the input value; and combine the first color-conversion table and a second color-conversion table predetermined in accordance with the printer, the second color-conversion table being used to convert a signal value in the first color space to a signal value in the second color space, and generate a third color-conversion table for converting an input signal value in the first color space to a signal value in the second color space.

According to a tenth aspect of the present disclosure, there is provided a program causing a computer to execute a process comprising: generating a first color-conversion table describing a correspondence between an input value in a first color space and a colorimetric value in the first color space, the first color space being independent of a printer, the colorimetric value being a result of color measurement of a printed image obtained by the printer printing a signal value in a second color space, the second color space being dependent of the printer, the signal value in the second color space being a conversion result of the input value; and converting an input signal value in the first color space to a signal value in the second color space by using the first color-conversion table and a second color-conversion table, the second color-conversion table being predetermined in accordance with the printer and being used to convert a signal value in the first color space to a signal value in the second color space.

According to an eleventh aspect of the present disclosure, there is provided a method comprising: generating a first color-conversion table describing a correspondence between an input value in a first color space and a colorimetric value in the first color space, the first color space being independent of a printer, the colorimetric value being a result of color measurement of a printed image obtained by the printer printing a signal value in a second color space, the second color space being dependent of the printer, the signal value in the second color space being a conversion result of the input value; and converting an input signal value in the first color space to a signal value in the second color space by using the first color-conversion table and a second color-conversion table, the second color-conversion table being predetermined in accordance with the printer and being used to convert a signal value in the first color space to a signal value in the second color space.

The color conversion apparatus according to the first aspect enables a reduction of the time required to convert signal values in the printer-independent first color space to signal values in the printer-dependent second color space, compared with the case in which a color conversion table is generated by numerically solving conversion conditions generated on the basis of a colorimetric result of a printed image from a printer.

The color conversion apparatus according to the second aspect enables color reproducibility of an image, which is printed on a sheet, to be improved, compared with the case in which the first color-conversion table is not generated in accordance with the sheet information.

The color conversion apparatus according to the third aspect enables a reduction of the time required to convert signal values in the first color space to signal values in the second color space, compared with the case in which the first color-conversion table is generated when the difference in color between a sheet and a regular sheet falls within the predetermined range.

The color conversion apparatus according to the fourth aspect enables color reproducibility of an image, which is printed on a sheet, to be improved, compared with the case in which the second color-conversion table is not determined in accordance with the sheet type.

The color conversion apparatus according to the fifth aspect enables a reduction of the time required to convert signal values in the first color space to signal values in the second color space, compared with the case in which a color conversion tables is generated by numerically solving conversion conditions generated on the basis of a colorimetric result of a printed image from a printer.

The color conversion apparatus according to the sixth aspect enables a reduction of the time required to convert signal values in the first color space to signal values in the second color space, compared with the case in which a color conversion table is generated by numerically solving conversion conditions generated on the basis of a colorimetric result of a printed image from a printer.

The color conversion apparatus according to the seventh aspect enables a reduction of the time required to convert signal values in the first color space to signal values in the second color space of five or more colors including normal colors and spot colors.

The color conversion apparatus according to the eighth aspect enables a reduction of the time required to convert signal values in the first color space to signal values in the second color space, compared with the case in which an output profile is not generated by combining the first color-conversion table with the second color-conversion table.

The color-conversion-table generating apparatus according to the ninth aspect enables a reduction of the time required to convert signal value in the printer-independent first color space to signal values in the printer-dependent second color space, compared with the case in which a color conversion table is generated by numerically solving conversion conditions generated on the basis of a colorimetric result of a printed image from a printer.

The program according to the tenth aspect enables a reduction of the time required to convert signal values in the printer-independent first color space to signal values in the printer-dependent second color space, compared with the case in which a color conversion table is generated by numerically solving conversion conditions generated on the basis of a colorimetric result of a printed image from a printer.

The method according to the eleventh aspect enables a reduction of the time required to convert signal values in the printer-independent first color space to signal values in the printer-dependent second color space, compared with the case in which a color conversion table is generated by numerically solving conversion conditions generated on the basis of a colorimetric result of a printed image from a printer.

Brief Description of the Drawings

Exemplary embodiment of the present disclosure will be described in detail based on the following figures, wherein:

Fig. 1 is a diagram for describing the configuration of a print system to which the present exemplary embodiment is applied;
Fig. 2 is a diagram illustrating functional blocks of a color conversion apparatus;
Fig. 3 is a diagram illustrating exemplary color conversion processing performed by a color conversion unit by using an output profile generated by a profile generating unit;
Fig. 4 is a flowchart of an exemplary process of generating a reference output profile; and
Fig. 5 is a flowchart of an exemplary process of generating an output profile.

Detailed Description

An exemplary embodiment of the present disclosure will be described below by referring to the attached drawings.

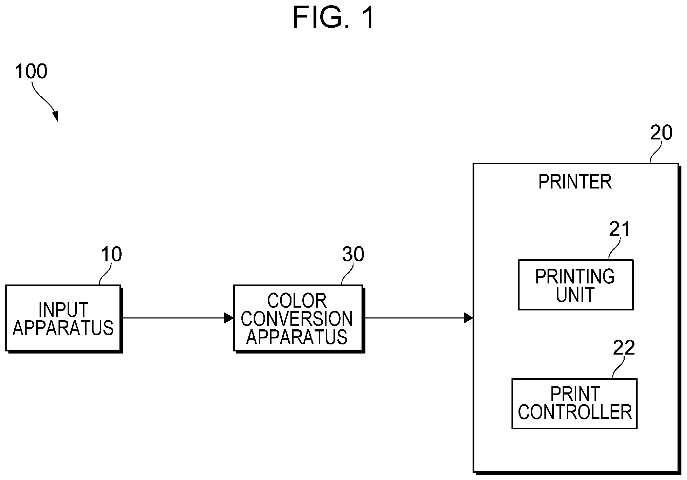

Fig. 1 is a diagram for describing the configuration of a print system 100 to which the present exemplary embodiment is applied.

The print system 100 illustrated in Fig. 1 includes an input apparatus 10, a printer 20, and a color conversion apparatus 30. The input apparatus 10, the printer 20, and the color conversion apparatus 30 are communicatively connected to each other.

As a network which connects the input apparatus 10, the printer 20, and the color conversion apparatus 30 to each other, for example, a local area network (LAN) or the Internet is used. The network may have a combined configuration of a LAN and the Internet.

The input apparatus 10 is constituted by a computer. The input apparatus 10 inputs, to the color conversion apparatus 30, image data used in printing performed by the printer 20.

The printer 20 prints images on sheets, which are an exemplary recording medium, on the basis of image data which has been input by the input apparatus 10 and on which the color conversion apparatus 30 has performed color conversion processing. The printer 20 includes a printing unit 21, which performs printing, and a print controller 22, which controls operations of the printing unit 21.

The printing unit 21 prints images on sheets, for example, by using an electrophotographic system. The printing unit 21 according to the present exemplary embodiment uses toners of yellow (Y), magenta (M), cyan (C), and black (K) (hereinafter these colors may be denoted as normal colors) and toners of spot colors, which are different from the normal colors, to print images on sheets. Toner is an exemplary color material used in image formation. The spot colors are different from the normal colors. The spot colors may be, for example, difficult to be produced by using the toners of yellow, magenta, cyan, and black, which are the normal colors. Examples of the spot colors include, not only fluorescent pink, fluorescent yellow, white, light cyan, orange, violet, and green, but also metallic colors, such as gold color and silver color, which are tinted with metal pigments. However, the spot colors are not limited to these. In the present exemplary embodiment, the case in which the printing unit 21 forms images by using, in addition to the normal colors, toners of fluorescent pink (P) and green (G) as the spot colors will be described as an example.

As long as the printing unit 21 uses color materials of yellow (Y), magenta (M), cyan (C), and black (K), which are the normal colors, and color materials of one or more spot colors to form images on sheets, the print format and the type of color material are not particularly limited. The printing unit 21 may print images on sheets, instead of by using an electrophotographic system as described above, for example, by using an inkjet system, a thermal transfer system, or an offset printing.

In the description below, yellow (Y), magenta (M), cyan (C), and black (K), which are the normal colors, may be denoted as YMCK color. A combination of YMCK color and the spot colors of fluorescent pink (P) and green (G), which are used in printing performed by the printer 20, may be denoted as YMCKPG color.

The color conversion apparatus 30, which is an exemplary color conversion apparatus or an exemplary color-conversion-table generating apparatus, is constituted by a computer. The color conversion apparatus 30 may be physically a single computer or may be implemented through distribution processing performed by multiple computers. The color conversion apparatus 30 may be constituted as a shared server which provides a so-called cloud service, or may be constituted as an on-premises server.

The color conversion apparatus 30 may be embedded, as a part of the printer 20, in the printer 20.

In the print system 100 according to the present exemplary embodiment, image data represented by signal values in the RGB color space is input from the input apparatus 10 to the color conversion apparatus 30. The color conversion apparatus 30 converts input signal values in the RGB color space to signal values in the YMCKPG color space used by the printer 20. Specifically, the color conversion apparatus 30 converts signal values in the RGB color space to signal values in the YMCKPG color space by using an input profile and an output profile which are described below.

The color conversion apparatus 30 outputs, to the printer 20, image data represented by signal values in the YMCKPG color space. The printer 20 prints images on sheets by using the tonners of Y, M, C, K, P, and G colors on the basis of image data obtained from the color conversion apparatus 30.

A Signal value in the YMCKPG color space includes signal values of YMCK colors, which correspond to the amounts of use of the toners of YMCK colors, and signal values of P color and G color which are the spot colors. A signal value of each color in the YMCKPG color space is associated with the amount of toner of the corresponding color, which is to be consumed by the printing unit 21 of the printing unit 21.

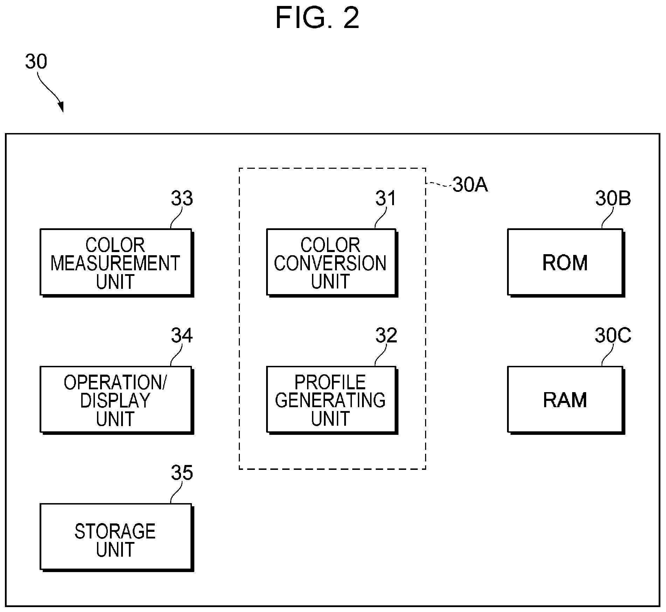

Fig. 2 is a diagram illustrating functional blocks of the color conversion apparatus 30. The color conversion apparatus 30 includes a color conversion unit 31, which performs color conversion processing on image data received from the input apparatus 10, and a profile generating unit 32, which generates an output profile used in the color conversion processing performed by the color conversion unit 31. The color conversion apparatus 30 also includes a color measurement unit 33, which measures colors of an image printed on a sheet by the printer 20, and an operation/display unit 34, which displays information to users and receives input of information through user operations. The color conversion apparatus 30 further includes a storage unit 35 which stores information such as an output profile generated by the profile generating unit 32.

The functions of the color conversion unit 31 and the profile generating unit 32 of the color conversion apparatus 30 are implemented by using a central processing unit (CPU) 30A which is an exemplary processor. The CPU 30A reads programs stored in a read only memory (ROM) 30B, and executes programs by using a random access memory (RAM) 30C as a work area. Programs executed by the CPU 30A may be provided to the color conversion apparatus 30 in such a manner that the programs are stored in a computer-readable recording medium, such as a magnetic recording medium (for example, a magnetic tape or a magnetic disk), an optical recording medium (for example, an optical disk), a magneto-optical recording medium, or a semiconductor memory. Programs executed by the CPU 30A may be downloaded to the color conversion apparatus 30 by using a communication unit such as the Internet.

In the present exemplary embodiment, the functions of the color conversion unit 31 and the profile generating unit 32 of the color conversion apparatus 30 are implemented through software. However, the configuration is not limited to this. For example, the functions may be implemented by using an application specific integrated circuit (ASIC).

The color conversion unit 31 converts signal values in the RGB color space, which represent image data received from the input apparatus 10, to signal values in the YMCKPG color space, which are used by the printer 20, by using an input profile and an output profile stored in the storage unit 35.

In the present exemplary embodiment, a profile means color conversion conditions used in color conversion between data having signal values in different color spaces.

The input profile is used to convert signal values in the RGB color space, which represent image data received from the input apparatus 10, to signal values in a color space which is independent of a device, such as the input apparatus 10 or the printer 20. In the present exemplary embodiment, the input profile is used to convert signal values in the RGB color space to signal values in the L*a*b* color space serving as a device-independent color space. The L*a*b* color space is an exemplary first color space, and is expressed by an orthogonal-coordinates color space whose axes represent brightness L*, chromaticity a*, and chromaticity b*.

The output profile is used to convert signal values in the L*a*b* color space, which are obtained through conversion using the input profile, to signal values in the YMCKPG color space used by the printer 20. Specifically, the output profile is used to convert signal values in the L*a*b* color space of three variables into signal values in the YMCKPG color space of six variables including the normal colors and the spot colors. The YMCKPG color space is an exemplary second color space. The output profile is an exemplary third color-conversion table.

The profile generating unit 32 generates an output profile used in the color conversion processing performed by the color conversion unit 31. A process of the profile generating unit 32 generating an output profile will be described in detail below.

The color measurement unit 33 measures colors of an image printed on a sheet by the printer 20, and obtains colorimetric values expressed as signal values in the L*a*b* color space.

The configuration of the color measurement unit 33 is not particularly limited. Examples of the configuration may include a configuration in which colors are measured in response to operations of a user who moves a colorimeter on an image printed on a sheet by the printer 20. The color measurement unit 33 may be disposed inside the printer 20, and may read an image, which is printed on a sheet by the printer 20, to measure its colors.

The operation/display unit 34 displays display screens for providing information to users. The operation/display unit 34 receives input of information through user operations on display screens.

When the profile generating unit 32 is to generate an output profile, the operation/display unit 34 according to the present exemplary embodiment displays, as a display screen, an input screen for receiving input of the type of a sheet which is to be used in image printing of the printer 20.

The storage unit 35 stores an input profile and an output profile used in color conversion processing performed by the color conversion unit 31.

The storage unit 35 stores reference output profiles and a K-amount/spot-color-amount determination model which are used by the profile generating unit 32 generating an output profile.

Assume the case where signal values in the L*a*b* color space, which is a color space independent of the printer 20, are converted to signal values in the YMCKPG color space, which is a color space dependent of the printer 20, so that the printer 20 prints an image. In this case, if colorimetric matching between signal values in the L*a*b* color space and converted signal values in the YMCKPG color space is not considered, color reproducibility of an image is likely to be reduced.

Meanwhile, in view of improved color reproducibility, a printer model, which indicates correspondences between the L*a*b* color space and the YMCKPG color space and which is made on the basis of the colorimetric result of an image printed by the printer 20, may be numerically solved to generate an output profile for converting signal values in the L*a*b* color space to signal values in the YMCKPG color space. In this case, a time, which is required to generate an output profile and perform color conversion processing using the generated output profile, is likely to be long.

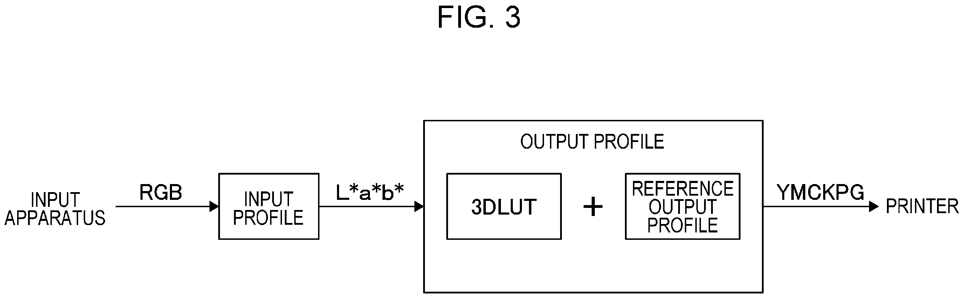

Fig. 3 is a diagram illustrating exemplary color conversion processing performed by the color conversion unit 31 by using an output profile generated by the profile generating unit 32.

In the color conversion apparatus 30 according to the present exemplary embodiment, the profile generating unit 32 generates an output profile, which is used to convert signal values in the L*a*b* color space to signal values in the YMCKPG color space, by using a predetermined reference output profile and a three-dimensional lookup table (3DLUT) which indicates color conversion conditions obtained from the colorimetric result of a colorimetric image printed by the printer 20. The 3DLUT is an exemplary first color-conversion table, and a reference output profile is an exemplary second color-conversion table.

The color conversion unit 31 of the color conversion apparatus 30 uses the input profile to convert image data, which is represented by signal values in the RGB color space and which is received from the input apparatus 10, to signal values in the L*a*b* color space independent of the printer 20. The color conversion unit 31 uses the output profile, which is generated by the profile generating unit 32, to convert signal values in the L*a*b* color space to signal values in the YMCKPG color space.

A process of generating an output profile, which is performed by the profile generating unit 32 of the color conversion apparatus 30, will be described.

First, a reference output profile, which is used in the process of the profile generating unit 32 generating an output profile, will be described.

A reference output profile describes color conversion conditions for converting signal values in the L*a*b* color space, which is an exemplary first color space, to signal values in the YMCKPG color space. In the present exemplary embodiment, reference output profiles are predetermined for the printer 20 and for the respective types of sheets used in image printing performed by the printer 20. The reference output profiles are stored in the storage unit 35 in association with the printer 20 and the respective types of sheets.

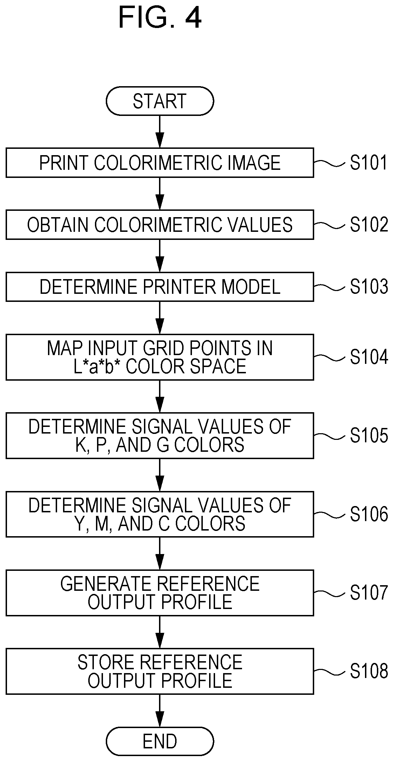

Fig. 4 is a flowchart of an exemplary process of generating a reference output profile.

For example, a reference output profile may be generated through the process described below. A reference output profile may be generated by the profile generating unit 32 of the color conversion apparatus 30 for storage in the storage unit 35, or may be generated, for example, by another apparatus other than the color conversion apparatus 30 for storage in the storage unit 35. The description below will be made under the assumption that a profile generating apparatus (not illustrated), which is another apparatus other than the color conversion apparatus 30, generates a reference output profile.

The profile generating apparatus causes the printer 20 to print a colorimetric image on a predetermined type of sheet (step 101). Sheet types mean such sheet types that colors of images on the sheets are different from each other because the color tones of the surfaces of the sheets are different from each other. Examples of the sheet types include, but not particularly limited to, gloss coating paper, matt coated paper, and high-quality paper.

The profile generating apparatus inputs, to the printer 20, colorimetric image data which is image data representing a colorimetric image. In this example, the colorimetric image data is represented by signal values in the YMCKPG color space. The printer 20 uses the colorimetric image data, which is received from the profile generating apparatus, to print the colorimetric image on a sheet of the selected type. The colorimetric image is an image in which multiple patches (for example, rectangular images), having colors which cover the entire color gamut printable by the printer 20, are arranged. In this example, the colorimetric image is an image in which multiple patches, in which image data represented by signal values of YMCKPG color signals at predetermined step intervals is printed, are arranged.

The profile generating apparatus obtains colorimetric values which are a result of color measurement of the colorimetric image formed on the sheet (step 102). Specifically, the profile generating apparatus obtains information by reading, as colorimetric values, the patches in the colorimetric image by using a colorimeter (not illustrated). In this example, the profile generating apparatus obtains colorimetric values in the L*a*b* color space which is a color space independent of a device such as the printer 20.

The profile generating apparatus uses the colorimetric values, which are obtained in step 102, to determine a printer model (step 103). The printer model describes conversion conditions for predicting L*a*b* color space signal values of an image, which is printed by the printer 20, from signal values of the colors of the YMCKPG color space. The printer model may be a function expressing the relationship between signal values of the colors of the YMCKPG color space and signal values in the L*a*b* color space. The printer model determined in step 103 is expressed as function fi in Expression (1),

$$(L^*, a^*, b^*) = f_1(Y, M, C, K, P, G) \ldots (1).$$

The profile generating apparatus sets input grid points in the L*a*b* color space. The profile generating apparatus maps the input grid points, which are set in the L*a*b* color space, in the L*a*b* color space's color gamut printable by the printer 20 (step 104). The input grid points, which are set in the L*a*b* color space, are expressed by L*a*b* color space signal values at predetermined step intervals.

For the signal value of each input grid point in the L*a*b* color space which is mapped in step 104, the profile generating apparatus determines the signal value of K color of the YMCKPG color space and the signal values of P color and G color which are spot colors (step 105). Specifically, the profile generating apparatus uses a predetermined K-amount/spot-color-amount determination model, which is stored in the storage unit 35, to determine the signal values of K color, P color, and G color. Like "a" in Expression (2), the K-amount/spot-color-amount determination model for obtaining the signal values of K color, P color, and G color from a signal value in the L*a*b* color space may be a function of the relationship between the signal values of K color, P color, and G color and a signal value in the L*a*b* color space,

$$(K, P, G) = a(L^*, a^*, b^*) \ldots (2).$$

The K-amount/spot-color-amount determination model describes color conversion conditions for calculating a signal value of K color, which is a normal color, and signal values of P and G colors, which are spot colors, from a signal value in the L*a*b* color space. A known model of the related art may be used as the K-amount/spot-color-amount determination model.

The K-amount/spot-color-amount determination model is generated, for example, through a process described below, and is stored in the storage unit 35. In this example, the description will be made under the assumption that the profile generating apparatus generates the K-amount/spot-color-amount determination model.

The profile generating apparatus prints a colorimetric image on a sheet by using the printer 20, and obtains a conversion function of the relationship between signal values of the colors of the YMCKPG color space, which are used in printing the colorimetric image, and L*a*b* color space colorimetric values obtained through color measurement of the colorimetric image. The profile generating apparatus numerically solves the conversion function by using, as an input, combinations of an L*a*b* color space signal value and its corresponding signal values of K color, P color, and G color of the YMCKPG color space. Thus, the profile generating apparatus calculates colorimetrically-matched signal values of the remaining Y, M, and C colors of the YMCKPG color space.

The profile generating apparatus determines difference in color between input signal values in the L*a*b* color space and colorimetric values of an image reproduced from the combinations of the signal values of K color, P color, and G color of the YMCKPG color space and the calculated signal values of Y color, M color and C color. The profile generating apparatus determines the K-color conversion ratio with respect to the input signal values in the L*a*b* color space on the basis of determination of the difference in color, and determines a signal value of K color. On the basis of determination of the difference in color and the determined signal value of K color, the profile generating apparatus determines the P-color conversion ratio and the G-color conversion ratio with respect to the input signal values in the L*a*b* color space, and determines signal values of P color and G color. The K-color conversion ratio, the P-color conversion ratio, and the G-color conversion ratio are ratios of conversion to signal values of K, P, and G colors, respectively, which are used in conversion of a signal value in the L*a*b* color space to a signal value in the YMCKPG color space.

As described above, the profile generating apparatus may generate a K-amount/spot-color-amount determination model for obtaining signal values of K color, P color, and G color from a signal value in the L*a*b* color space.

The profile generating apparatus determines signal values of Y color, M color, and C color of the YMCKPG color space through reverse conversion of the printer model determined in step 103 (step 106). Specifically, the profile generating apparatus performs reverse conversion on function fi representing the printer model, and thus determines signal values of Y color, M color, and C color of the YMCKPG color space from the signal values of K color, P color and G color, which are determined in step 105, and the signal value of each input grid point in the L*a*b* color space, which is mapped in step 104. The reverse conversion of a printer model means execution of reverse color conversion of the color conversion using the printer model. As in Expression (3), the reverse conversion of the printer model in step 106 is expressed as reverse conversion function $f_1^{-1}$ of function fi,

$$(Y, M, C) = f_1^{-1}(L^*, a^*, b^*, K, P, G) \dots (3).$$

For each of the input grid points in the L*a*b* color space which are mapped in step 104, the profile generating apparatus performs the processes in step 105 and step 106 to determine the signal values of the colors of the YMCKPG color space.

On the basis of the signal values of the colors of the YMCKPG color space which are determined for each input grid point in the L*a*b* color space, the profile generating apparatus generates a reference output profile which is used to convert signal values in the L*a*b* color space to signal values in the YMCKPG color space (step 107). The profile generating apparatus stores the generated reference output profile in the storage unit 35 of the color conversion apparatus 30 in association with information about the printer 20 and the type of sheet (step 108). As described above, the profile generating apparatus ends the series of processes for generating a reference output profile.

A process of generating an output profile, which is performed by the profile generating unit 32 of the color conversion apparatus 30 according to the present exemplary embodiment, will be described. As described above, the profile generating unit 32 uses a predetermined reference output profile and the 3DLUT, which is obtained from a colorimetric result of an image printed by the printer 20, to generate an output profile.

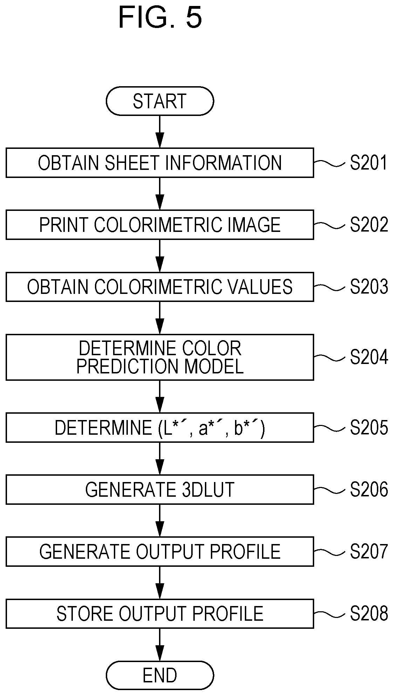

Fig. 5 is a flowchart of an exemplary process of generating an output profile.

The profile generating unit 32 obtains sheet information which is information about the sheet type used in printing an image by the printer 20 (step 201). The profile generating unit 32 causes, for example, the operation/display unit 34 of the color conversion apparatus 30 to display an input screen for receiving input of the sheet type. In response to user operations on the input screen of the operation/display unit 34, the profile generating unit 32 obtains sheet information which is information about the sheet type. The profile generating unit 32 may obtain the sheet information, for example, on the basis of a detection result of a sheet sensor or the like which detects the sheet type provided in the printer 20.

The profile generating unit 32 uses the reference output profile, corresponding to the sheet type, to print a colorimetric image on a sheet of the type, which is obtained in step 201, by the printer 20 (step 202).

Specifically, the profile generating unit 32 sets grid points in the L*a*b* color space. The grid points, which are set in the L*a*b* color space, are represented by L*a*b* color space signal values at predetermined step intervals. In the description below, the signal value of a grid point which is set by the profile generating unit 32 in the L*a*b* color space may be denoted as (L*', a*', b*').

After that, the profile generating unit 32 uses the reference output profile, corresponding to the sheet type, to convert the signal values (L*', a*', b*') of the grid points, which are set in the L*a*b* color space, to signal values in the YMCKPG color space. In the present exemplary embodiment, each of the signal values (L*', a*', b*'), which are input to the reference output profile, of the grid points, which are set in the L*a*b* color space, is an exemplary input value in the first color space.

When the sheet types associated with the reference output profiles stored in the storage unit 35 do not include a sheet type matching the sheet type obtained in step 201, the profile generating unit 32 uses a reference output profile associated with a sheet type closest to the type obtained in step 201. The profile generating unit 32 may use a predetermined reference output profile among the reference output profiles stored in the storage unit 35.

The profile generating unit 32 inputs, to the printer 20, colorimetric image data represented by YMCKPG color space signal values converted by using the reference output profile. The printer 20 uses the colorimetric image data, which is received from the profile generating unit 32, to print a colorimetric image on a sheet of the type obtained in step 201.

A colorimetric image which the profile generating unit 32 causes the printer 20 to print in step 202 is an exemplary printed image. The colorimetric image is an image in which multiple patches are arranged. In the patches, image data represented by signal values of YMCKPG color signals, which are obtained through conversion of the signal values $(L^{*\prime}, a^{*\prime}, b^{*\prime})$ of the grid points in the $L^*a^*b^*$ color space, is printed.

The profile generating unit 32 obtains colorimetric values which are a result of the color measurement unit 33 performing color measurement on the colorimetric image formed on the sheet (step 203). Specifically, the profile generating unit 32 obtains, as colorimetric values, information obtained by the color measurement unit 33 reading the patches of the colorimetric image. In this example, the profile generating unit 32 obtains colorimetric values expressed by signal values in the $L^*a^*b^*$ color space.

The profile generating unit 32 uses the colorimetric values, which are obtained in step 203, to determine a color prediction model (step 204).

In this example, the profile generating unit 32 determines a color prediction model for predicting $L^*a^*b^*$ color space signal values of an image, which is printed by the printer 20, from the signal values $(L^{*\prime}, a^{*\prime}, b^{*\prime})$ of the grid points in the $L^*a^*b^*$ color space, which are input to the reference output profile. The color prediction model determined in step 204 is expressed as function fz in Expression (4),

$$(L^*, a^*, b^*) = f_2(L^{*\prime}, a^{*\prime}, b^{*\prime}) \ldots (4).$$

The color prediction model is an exemplary first correspondence for converting an input value in the first color space to a colorimetric value in the first color space.

Through reverse conversion of the color prediction model determined in step 204, the profile generating unit 32 determines $L^*a^*b^*$ color space signal values $(L^{*\prime}, a^{*\prime}, b^{*\prime})$, which are input to the reference output profile, from $L^*a^*b^*$ color space signal values of the image printed by the printer 20 (step 205). The reverse conversion of a color prediction model means execution of reverse color conversion of the color conversion using the color prediction model. The reverse conversion of the color prediction model in step 205 is expressed as reverse conversion function $f_2^{-1}$ of function fz, as in Expression (5),

$$(L^{*\prime}, a^{*\prime}, b^{*\prime}) = f_2^{-1}(L^*, a^*, b^*) \ (5).$$

From the result of reverse conversion of the color prediction model in step 205, the profile generating unit 32 determines color conversion conditions for converting $L^*a^*b^*$ color space signal values of an image printed by the printer 20, to $L^*a^*b^*$ color space signal values $(L^{*\prime}, a^{*\prime}, b^{*\prime})$, which are input to the reference output profile (step 206). In the present exemplary embodiment, the profile generating unit 32 generates, as color conversion conditions, a 3DLUT for converting $L^*a^*b^*$ color space signal values $(L^*, a^*, b^*)$ to $L^*a^*b^*$ color space signal values $(L^{*\prime}, a^{*\prime}, b^{*\prime})$.

The profile generating unit 32 combines the 3DLUT, which is generated in step 206, with the reference output profile. Thus, the profile generating unit 32 generates an output profile for converting signal values in the $L^*a^*b^*$ color space independent of the printer 20 to YMCKPG color space signal values printable by the printer 20 (step 207).

The profile generating unit 32 stores, in the storage unit 35, the output profile generated in step 207 (step 208), and ends the series of processes.

As described above, the color conversion unit 31 of the color conversion apparatus 30 uses an output profile, which is generated by the profile generating unit 32, to perform color conversion processing on image data received from the input apparatus 10.

Specifically, the color conversion unit 31 converts signal values in the RGB color space, which represent image data received from the input apparatus 10, to signal values in the $L^*a^*b^*$ color space by using the input profile stored in the storage unit 35. Then, the color conversion unit 31 converts signal values in the $L^*a^*b^*$ color space to signal values in the YMCKPG color space by using an output profile generated by the profile generating unit 32.

As described above, in the present exemplary embodiment, the profile generating unit 32 of the color conversion apparatus 30 converts signal values in the $L^*a^*b^*$ color space independent of the printer 20 to signal values in the YMCKPG color space dependent of the printer 20, and obtains colorimetric values in the $L^*a^*b^*$ color space which are a result of color measurement of a colorimetric image printed by the printer 20. The profile generating unit 32 generates a 3DLUT which describes correspondences between signal values in the $L^*a^*b^*$ color space, which are input to the printer 20, and colorimetric values in the $L^*a^*b^*$ color space, which are a result of color measurement of a colorimetric image printed by the printer 20.

Further, the profile generating unit 32 combines the 3DLUT and a reference output profile, which is predetermined in accordance with the printer 20 and which is used to convert L*a*b* color space signal values to YMCKPG color space signal values, and generates an output profile which is used to convert signal values in the L*a*b* color space, which are input to the printer 20, to signal values in the YMCKPG color space.

The color conversion unit 31 of the color conversion apparatus 30 uses the output profile, which is generated by the profile generating unit 32, and the predetermined input profile to convert signal values in the RGB color space, which represent image data which is input from the input apparatus 10 or the like, to signal values in the YMCKPG color space.

Thus, for example, compared with the case in which, without use of a result of color measurement of a colorimetric image, color conversion of image data, which is input from the input apparatus 10 or the like, is performed by using a common output profile predetermined in accordance with the printer 20 or the like, color reproducibility of an image printed by the printer 20 may be improved.

The color conversion apparatus 30 according to the present exemplary embodiment generates an output profile by combining a 3DLUT and a predetermined reference output profile. Thus, for example, compared with the case in which an output profile is generated by numerically solving color conversion conditions indicating correspondences between the L*a*b* color space and the YMCKPG color space, which are generated on the basis of a colorimetric result of a colorimetric image, the time required to generate an output profile may be reduced.

This enables the color conversion apparatus 30 to reduce the time required for color conversion, in the case of color conversion of image data, which is received from the input apparatus 10 or the like, using an output profile.

In the color conversion apparatus 30 described above, reference output profiles are predetermined for the respective types of sheets used in image printing performed by the printer 20, and are stored in the storage unit 35 in association with the respective types of sheets. However, in the color conversion apparatus 30, a reference output profile may be determined on the basis of a regular sheet (for example, high-quality paper) which is the predetermined type of sheet.

In this case, the profile generating unit 32 may generate an output profile by using the reference output profile determined on the basis of the regular sheet, not on the basis of the sheet information obtained in the step 201.

In the color conversion apparatus 30, when the difference in color between a sheet used in image printing performed by the printer 20 and a regular sheet associated with the reference output profile falls within a predetermined range, without generating an output profile, the color conversion unit 31 may use the reference output profile to convert signal values in the RGB color space, which represent image data received from the input apparatus 10 or the like, to signal values in the YMCKPG color space.

When the difference in color between a sheet used in image printing performed by the printer 20 and the regular sheet falls within the predetermined range, if color conversion is performed by using the reference output profile, a reduction of color reproducibility of an image printed by the printer 20 is difficult to occur. When the difference in color between a sheet used in image printing performed by the printer 20 and the regular sheet falls within the predetermined range, without generation of an output profile, the reference output profile is used to perform color conversion. Thus, the time required to generate an output profile is unnecessary, achieving a reduction of the time required for the color conversion.

Examples of the case in which the difference in color between a sheet used in image printing performed by the printer 20 and the regular sheet associated with the reference output profile falls within a predetermined range include the case in which the sheet used in image printing performed by the printer 20 matches the regular sheet, and the case in which the color of the sheet detected by a sheet sensor or the like provided in the printer 20 matches that of the regular sheet.

Signal values in the RGB color space are described as an example of signal values representing image data received from the input apparatus 10 by the color conversion apparatus 30. However, the configuration is not limited to this. Signal values representing image data received from the input apparatus 10 by the color conversion apparatus 30 may be, for example, signal values in a color space, such as YMCK or YMCKRGB, in addition to the RGB color space.

An output profile generated by the color conversion apparatus 30 is used for conversion from signal values in the L*a*b* color space, which is a device-independent color space, to signal values in the YMCKPG color space. However, a device-independent color space is not limited to the L*a*b* color space. For example, a device-independent color space may be the XYZ color space, the Yxy color space, the L*u*v* color space, or the HLS color space.

In the present exemplary embodiment described above, an output profile, which is generated by the profile generating unit 32 of the color conversion apparatus 30, is used to convert signal values in the L*a*b* color space of three variables to signal values in the YMCKPG color space of six variables including normal colors and two spot colors. However, as long as an output profile is used to convert signal values in the L*a*b* color space of three variables to signal values in a color space of five or more variables including normal colors and spot colors, the number of spot colors may be one, or three or more.

Typically, as the number of spot colors increases, in other words, as the number of variables of a color space after conversion increases, the time required to generate an output profile is likely to be long. Therefore, the color conversion apparatus 30 according to the present exemplary embodiment is used more effectively in the case where signal values in the L*a*b* color space of three variables are converted to signal values in a color space of more variables.

The exemplary embodiment of the present disclosure is described. However, the technical scope of the present disclosure is not limited to the scope described in the exemplary embodiment. It is clear, from the description of the scope of claims, that an embodiment obtained by adding various changes or improvements to the exemplary embodiment is encompassed in the technical scope of the present disclosure.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

Appendix

(((1))) A color conversion apparatus comprising:
a processor configured to:

generate a first color-conversion table describing a correspondence between an input value in a first color space and a colorimetric value in the first color space, the first color space being independent of a printer, the colorimetric value being a result of color measurement of a printed image obtained by the printer printing a signal value in a second color space, the second color space being dependent of the printer, the signal value in the second color space being a conversion result of the input value; and
convert an input signal value in the first color space to a signal value in the second color space by using the first color-conversion table and a second color-conversion table, the second color-conversion table being predetermined in accordance with the printer and being used to convert a signal value in the first color space to a signal value in the second color space.

(((2))) The color conversion apparatus according to (((1))),

wherein the processor is configured to:
obtain sheet information which is information about a type of a sheet on which the printer prints an image, and generate the first color-conversion table in accordance with the sheet information.

(((3))) The color conversion apparatus according to (((2))),

wherein the second color-conversion table is determined based on a predetermined regular sheet, and
wherein the processor is configured to:
when a difference in color between the regular sheet and a sheet on which the printer prints an image falls within a predetermined range, convert a signal value in the first color space to a signal value in the second color space by using the second color-conversion table.

(((4))) The color conversion apparatus according to (((2))),

wherein the second color-conversion table is determined in accordance with the sheet type, and
wherein the processor is configured to:
generate the first color-conversion table on a basis of the sheet information by using the colorimetric value of the printed image printed on a basis of a signal value which is in the second color space and which is obtained through conversion of the input value using the second color-conversion table corresponding to the sheet type.

(((5))) The color conversion apparatus according to any one of (((1))) to (((4))),
wherein the processor is configured to:
generate the first color-conversion table for converting the colorimetric value in the first color space to a signal value which is in the first color space and which corresponds to the input value.

(((6))) The color conversion apparatus according to (((5))),
wherein the processor is configured to:
generate a first correspondence for converting the input value in the first color space to the colorimetric value in the first color space, and generate the first color-conversion table through reverse conversion of the first correspondence.

(((7))) The color conversion apparatus according to any one of (((1))) to (((6))),
wherein the processor is configured to:
convert a signal value in the first color space of three variables to a signal value in the second color space of five or more variables including a signal value of a normal color and a signal value of a spot color, the normal color being a color used normally, the spot color being a color other than the normal color.
(((8))) The color conversion apparatus according to any one of (((1))) to (((7))),
wherein the processor is configured to:

combine the first color-conversion table with the second color-conversion table and generate an output profile which is used to convert, for output, an input signal value in the first color space to a signal value in the second color space; and convert a first-color-space signal value to a signal value in the second color space by using the output profile, the first-color-space signal value being in the first color space and being obtained through conversion from a signal value in a third color space through an input profile, the third color space being dependent of an input apparatus.

(((9))) A color-conversion-table generating apparatus comprising:
a processor configured to:

generate a first color-conversion table describing a correspondence between an input value in a first color space and a colorimetric value in the first color space, the first color space being independent of a printer, the colorimetric value being a result of color measurement of a printed image obtained by the printer printing a signal value in a second color space, the second color space being dependent of the printer, the signal value in the second color space being a conversion result of the input value; and combine the first color-conversion table and a second color-conversion table predetermined in accordance with the printer, the second color-conversion table being used to convert a signal value in the first color space to a signal value in the second color space, and generate a third color-conversion table for converting an input signal value in the first color space to a signal value in the second color space.

(((10))) A program causing a computer to execute a process comprising:

generating a first color-conversion table describing a correspondence between an input value in a first color space and a colorimetric value in the first color space, the first color space being independent of a printer, the colorimetric value being a result of color measurement of a printed image obtained by the printer printing a signal value in a second color space, the second color space being dependent of the printer, the signal value in the second color space being a conversion result of the input value; and

converting an input signal value in the first color space to a signal value in the second color space by using the first color-conversion table and a second color-conversion table, the second color-conversion table being predetermined in accordance with the printer and being used to convert a signal value in the first color space to a signal value in the second color space.

The color conversion apparatus according to (((1))) enables a reduction of the time required to convert signal values in the printer-independent first color space to signal values in the printer-dependent second color space, compared with the case in which a color conversion table is generated by numerically solving conversion conditions generated on the basis of a colorimetric result of a printed image from a printer.

The color conversion apparatus according to (((2))) enables color reproducibility of an image, which is printed on a sheet, to be improved, compared with the case in which the first color-conversion table is not generated in accordance with the sheet information.

The color conversion apparatus according to (((3))) enables a reduction of the time required to convert signal values in the first color space to signal values in the second color space, compared with the case in which the first color-conversion table is generated when the difference in color between a sheet and a regular sheet falls within the predetermined range.

The color conversion apparatus according to (((4))) enables color reproducibility of an image, which is printed on a sheet, to be improved, compared with the case in which the second color-conversion table is not determined in accordance with the sheet type.

The color conversion apparatus according to (((5))) enables a reduction of the time required to convert signal values in the first color space to signal values in the second color space, compared with the case in which a color conversion tables is generated by numerically solving conversion conditions generated on the basis of a colorimetric result of a printed image from a printer.

The color conversion apparatus according to (((6))) enables a reduction of the time required to convert signal values in the first color space to signal values in the second color space, compared with the case in which a color conversion table is generated by numerically solving conversion conditions generated on the basis of a colorimetric result of a printed image from a printer.

The color conversion apparatus according to (((7))) enables a reduction of the time required to convert signal values in the first color space to signal values in the second color space of five or more colors including normal colors and spot colors.

The color conversion apparatus according to (((8))) enables a reduction of the time required to convert signal values in the first color space to signal values in the second color space, compared with the case in which an output profile is not generated by combining the first color-conversion table with the second color-conversion table.

The color-conversion-table generating apparatus according to (((9))) enables a reduction of the time required to convert signal value in the printer-independent first color space to signal values in the printer-dependent second color space, compared with the case in which a color conversion table is generated by numerically solving conversion conditions generated on the basis of a colorimetric result of a printed image from a printer.

The program according to (((10))) enables a reduction of the time required to convert signal values in the printer-independent first color space to signal values in the printer-dependent second color space, compared with the case in which a color conversion table is generated by numerically solving conversion conditions generated on the basis of a colorimetric result of a printed image from a printer.

**Claims**

1. A color conversion apparatus comprising:
   a processor configured to:

   generate a first color-conversion table describing a correspondence between an input value in a first color space and a colorimetric value in the first color space, the first color space being independent of a printer, the colorimetric value being a result of color measurement of a printed image obtained by the printer printing a signal value in a second color space, the second color space being dependent of the printer, the signal value in the second color space being a conversion result of the input value; and
   convert an input signal value in the first color space to a signal value in the second color space by using the first color-conversion table and a second color-conversion table, the second color-conversion table being predetermined in accordance with the printer and being used to convert a signal value in the first color space to a signal value in the second color space.

2. The color conversion apparatus according to claim 1, wherein the processor is configured to:
   obtain sheet information which is information about a type of a sheet on which the printer prints an image, and generate the first color-conversion table in accordance with the sheet information.

3. The color conversion apparatus according to claim 2,

   wherein the second color-conversion table is determined based on a predetermined regular sheet, and

   wherein the processor is configured to:
   when a difference in color between the regular sheet and a sheet on which the printer prints an image falls within a predetermined range, convert a signal value in the first color space to a signal value in the second color space by using the second color-conversion table.

4. The color conversion apparatus according to claim 2,

   wherein the second color-conversion table is determined in accordance with the sheet type, and
   wherein the processor is configured to:
   generate the first color-conversion table on a basis of the sheet information by using the colorimetric value of the printed image printed on a basis of a signal value which is in the second color space and which is obtained through conversion of the input value using the second color-conversion table corresponding to the sheet type.

5. The color conversion apparatus according to any one of claims 1 to 4,
   wherein the processor is configured to:
   generate the first color-conversion table for converting the colorimetric value in the first color space to a signal value which is in the first color space and which corresponds to the input value.

6. The color conversion apparatus according to claim 5,
   wherein the processor is configured to:
   generate a first correspondence for converting the input value in the first color space to the colorimetric value in the first color space, and generate the first color-conversion table through reverse conversion of the first correspondence.

7. The color conversion apparatus according to any one of claims 1 to 6,
   wherein the processor is configured to:
   convert a signal value in the first color space of three variables to a signal value in the second color space of five or more variables including a signal value of a normal color and a signal value of a spot color, the normal color being a color used normally, the spot color being a color other than the normal color.

8. The color conversion apparatus according to any one of claims 1 to 7,
   wherein the processor is configured to:

   combine the first color-conversion table with the second color-conversion table and generate an output profile which is used to convert, for output, an input signal value in the first color space to a signal value in the second color space; and

convert a first-color-space signal value to a signal value in the second color space by using the output profile, the first-color-space signal value being in the first color space and being obtained through conversion from a signal value in a third color space through an input profile, the third color space being dependent of an input apparatus.

9. A color-conversion-table generating apparatus comprising:

a processor configured to:

generate a first color-conversion table describing a correspondence between an input value in a first color space and a colorimetric value in the first color space, the first color space being independent of a printer, the colorimetric value being a result of color measurement of a printed image obtained by the printer printing a signal value in a second color space, the second color space being dependent of the printer, the signal value in the second color space being a conversion result of the input value; and
combine the first color-conversion table and a second color-conversion table predetermined in accordance with the printer, the second color-conversion table being used to convert a signal value in the first color space to a signal value in the second color space, and generate a third color-conversion table for converting an input signal value in the first color space to a signal value in the second color space.

10. A program causing a computer to execute a process comprising:

generating a first color-conversion table describing a correspondence between an input value in a first color space and a colorimetric value in the first color space, the first color space being independent of a printer, the colorimetric value being a result of color measurement of a printed image obtained by the printer printing a signal value in a second color space, the second color space being dependent of the printer, the signal value in the second color space being a conversion result of the input value; and
converting an input signal value in the first color space to a signal value in the second color space by using the first color-conversion table and a second color-conversion table, the second color-conversion table being predetermined in accordance with the printer and being used to convert a signal value in the first color space to a signal value in the second color space.

11. A method comprising:

generating a first color-conversion table describing a correspondence between an input value in a first color space and a colorimetric value in the first color space, the first color space being independent of a printer, the colorimetric value being a result of color measurement of a printed image obtained by the printer printing a signal value in a second color space, the second color space being dependent of the printer, the signal value in the second color space being a conversion result of the input value; and
converting an input signal value in the first color space to a signal value in the second color space by using the first color-conversion table and a second color-conversion table, the second color-conversion table being predetermined in accordance with the printer and being used to convert a signal value in the first color space to a signal value in the second color space.

# FIG. 1

100

# FIG. 2

# FIG. 3

INPUT APPARATUS →RGB→ INPUT PROFILE →L*a*b*→

OUTPUT PROFILE

3DLUT + REFERENCE OUTPUT PROFILE

→YMCKPG→ PRINTER

...

# FIG. 4

START

↓

PRINT COLORIMETRIC IMAGE ~ S101

↓

OBTAIN COLORIMETRIC VALUES ~ S102

↓

DETERMINE PRINTER MODEL ~ S103

↓

MAP INPUT GRID POINTS IN
L*a*b* COLOR SPACE ~ S104

↓

DETERMINE SIGNAL VALUES OF
K, P, AND G COLORS ~ S105

↓

DETERMINE SIGNAL VALUES OF
Y, M, AND C COLORS ~ S106

↓

GENERATE REFERENCE
OUTPUT PROFILE ~ S107

↓

STORE REFERENCE
OUTPUT PROFILE ~ S108

↓

END

# FIG. 5

START

OBTAIN SHEET INFORMATION ⟩～ S201

PRINT COLORIMETRIC IMAGE ⟩～ S202

OBTAIN COLORIMETRIC VALUES ⟩～ S203

DETERMINE COLOR
PREDICTION MODEL ⟩～ S204

DETERMINE (L*´, a*´, b*´) ⟩～ S205

GENERATE 3DLUT ⟩～ S206

GENERATE OUTPUT PROFILE ⟩～ S207

STORE OUTPUT PROFILE ⟩～ S208

END

Europäisches
Patentamt

European
Patent Office

Office européen
des brevets

# EUROPEAN SEARCH REPORT

**Application Number**

EP 24 15 6324

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/107291 A1 (KUEHN MARIO [DE]) 2 May 2013 (2013-05-02) | 1-6,8-11 | INV. H04N1/60 |
| Y | * the whole document * * figures 1,4,5 * * paragraphs [0002], [0009] * * paragraphs [0026] - [0028] * * paragraphs [0047] - [0060] * * paragraphs [0093], [0096], [0099] * * paragraphs [0089], [0096] * | 7 | H04N1/00 ADD. H04N1/54 |
| Y,D | JP 4 206743 B2 (FUJI XEROX CO LTD) 14 January 2009 (2009-01-14) * the whole document * * paragraphs [0018] - [0099] * | 7 | |

**TECHNICAL FIELDS SEARCHED (IPC)**

H04N

The present search report has been drawn up for all claims

| Place of search | Date of completion of the search | Examiner |
|---|---|---|
| The Hague | 30 June 2024 | Thollot, Julien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

....................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 6324

This annex lists the patent family members relating to the patent documents cited in the above-mentioned European search report.
The members are as contained in the European Patent Office EDP file on
The European Patent Office is in no way liable for these particulars which are merely given for the purpose of information.

30-06-2024

| Patent document cited in search report | Publication date | Patent family member(s) | Publication date |
|---|---|---|---|
| US 2013107291 A1 | 02-05-2013 | BR 112014010321 A2 | 02-05-2017 |
| | | CN 104040520 A | 10-09-2014 |
| | | EP 2774042 A1 | 10-09-2014 |
| | | US 2013107291 A1 | 02-05-2013 |
| | | WO 2013066720 A1 | 10-05-2013 |
| JP 4206743 B2 | 14-01-2009 | JP 4206743 B2 | 14-01-2009 |
| | | JP 2004194042 A | 08-07-2004 |
| | | US 2004114166 A1 | 17-06-2004 |

EPO FORM P0459

For more details about this annex : see Official Journal of the European Patent Office, No. 12/82

**EP 4 525 427 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4206743 B